# NOUVEAU FASCICULE DE BREVET EUROPEEN

(11) **EP 0 917 628 B2**
(45) Date de publication et mention de la décision concernant l'opposition: **31.10.2007**
(45) Mention de la délivrance du brevet: 23.04.2003
(21) Numéro de dépôt: 98929530.8
(22) Date de dépôt: 09.06.1998
(51) Int. Cl.: F16D 13/64, F16D 13/72

(54) **DISQUE ET COURONNE DE FRICTION D'EMBRAYAGE POUR EMBRAYAGE FONCTIONNANT A SEC PLUS PARTICULIEREMENT POUR VEHICULE AUTOMOBILE**
REIBUNGSSCHEIBE UND REIBRING FÜR EINE TROCKENKUPPLUNG, INSBESONDERE FÜR KRAFTFAHRZEUGE
CLUTCH FRICTION AND RING FOR DRY DISK CLUTCH, MORE PARTICULARLY FOR MOTOR VEHICLE

(30) Priorité: 17.06.1997 FR 9707477
(43) Date de publication de la demande: 26.05.1999
(73) Titulaire: Valeo Matériaux de Friction, 87020 Limoges (FR)
(72) Inventeur: FEDERZONI, Luc, F-38600 Fontaine (FR); BENOIT, Daniel, F-87000 Limoges (FR)
(74) Mandataire: Doressamy, Clarisse
(86) Numéro de dépôt international: PCT/FR1998/001181
(87) Numéro de publication internationale: WO 1998/058185

(56) Documents cités:
- EP-A- 0 260 828
- EP-A- 0 305 581
- EP-A- 0 625 647
- EP-A- 0 751 314
- DE-A- 2 531 570
- DE-A- 4 010 543
- DE-C- 4 443 096
- JP-A- 6 129 445
- US-A- 5 176 236
- US-A- 8 158 562
- PATENT ABSTRACTS OF JAPAN vol. 9, no. 42 (M-359), 22 février 1985 & JP 59 183119 A (AISHIN SEIKI), 18 octobre 1984
- PATENT ABSTRACTS OF JAPAN vol. 10, no. 171 (M-489), 17 juin 1986 & JP 61 021425 A (TOYOTA), 30 janvier 1986

## Description

La présente invention a pour objet un disque de friction d'embrayage pour embrayage fonctionnant à sec, plus particulièrement pour véhicule automobile, ainsi qu'une couronne de frottement en matériau de friction, destinée à équiper un tel disque de friction.

Une couronne de frottement pour disque de friction d'embrayage selon le préambule de la revendication 1 est connue du document JP-A-59183119.

Un embrayage de véhicule automobile fonctionnant à sec comprend, d'une manière générale comme par exemple décrit dans le document FR-A-2.553.163, un disque de friction muni de deux couronnes de frottement solidarisées chacune à un support éventuellement commun, le ou les supports étant relié(s) à un moyeu cannelé en prise avec un arbre d'entrée de boîte de vitesses. Un dispositif amortisseur de torsion est, en général, intercalé entre le ou les supports des couronnes et le moyeu cannelé. Un dispositif de progressivité est généralement placé entre les deux couronnes, réalisé par le ou les supports qui présente(nt), à cet effet, des dispositions particulières, ou par un dispositif additionnel.

Le disque de friction est, en service, placé entre, d'une part, un plateau de réaction relié directement ou indirectement au vilebrequin du moteur du véhicule et, d'autre part, un plateau de pression d'un mécanisme d'embrayage comportant un couvercle relié au plateau de réaction et un système élastique, en pratique un ressort dit diaphragme, sollicitant axialement le plateau de pression qui est relié en rotation au couvercle tout en pouvant se déplacer axialement par rapport à celui-ci d'une manière limitée.

En position embrayée, les couronnes de frottement du disque de friction sont serrées, sous l'effet du système élastique, entre le plateau de réaction et le plateau de pression, de sorte que le couple de rotation du moteur thermique est transmis à l'arbre d'entrée de boîte de vitesses.

Des moyens débrayeurs, en pratique des doigts dont est muni le diaphragme, permettent, lorsqu'ils sont sollicités, d'annihiler l'effet du système élastique ce qui, sous l'effet de moyens de rappel du plateau de pression agissant entre le plateau de pression et le couvercle, provoque l'éloignement du plateau de pression par rapport au plateau de réaction et ainsi le desserrement des couronnes de frottement du disque de friction lequel, monté mobile axialement sur l'arbre d'entrée de boîte de vitesses, se déplace entre le plateau de réaction et le plateau de pression, ce qui a pour effet d'interrompre la transmission du couple du moteur.

Afin que l'interruption de la transmission du couple soit totale, le débrayage doit être franc, c'est-à-dire que les couronnes de frottement ne doivent plus être en contact avec le plateau de réaction et le plateau de pression.

La demanderesse a constaté l'existence de phénomènes perturbant le desserrement correct des couronnes de frottement.

En effet, il se produit fréquemment un décollement inégal des couronnes de frottement de l'un des plateaux adjacents (plateau de réaction ou plateau de pression), voire un maintien contre l'un des plateaux, ce qui provoque la transmission d'un couple résiduel à l'arbre d'entrée de boîte de vitesses, qui a pour conséquence d'entraîner, d'une part, un passage difficile des rapports de boîtes de vitesses et, d'autre part, de causer une usure prématurée des organes de celle-ci.

La présente invention a pour objet de pallier ces inconvénients.

Un disque de friction d'embrayage pour embrayage fonctionnant à sec, plus particulièrement pour véhicule automobile présentant deux couronnes de frottement est, selon l'invention, caractérisé en ce que lesdites couronnes de frottement comportent des moyens générant une force de pression d'air sous l'effet de la rotation du disque de friction, en ce que lesdits moyens générant une force de pression d'air comprennent des rainures ménagées sur la face de chacune des couronnes de frottement destinées à venir en contact avec respectivement un plateau de réaction et un plateau de pression d'un embrayage et en ce que lesdites rainures comportent une rainure circonférentielle communiquant avec une pluralité de rainures radiales débouchant à la périphérie interne de la couronne de frottement et est isolée de la périphérie externe de la couronne de frottement.

Ainsi le décollement des couronnes de frottement et le desserrement du disque sont assurés correctement.

Selon d'autres aspects de l'invention pris séparément ou dans toutes leurs combinaisons techniquement possibles :
- les rainures sont disposées de manière symétrique d'une couronne de frottement à l'autre par rapport à un plan médian du disque de friction, en sorte de créer des forces de pression d'air de part et d'autre du disque de friction en rotation qui sont sensiblement égales en étant opposées ;
- au moins une rainure radiale présente une section qui s'élargit dans la direction radiale vers l'extérieur de la couronne ;
- ladite rainure circonférentielle est isolée de la périphérie externe de la couronne de frottement ;
- une seule rainure circonférentielle est ménagée dans la couronne de frottement ;
- ladite rainure circonférentielle se trouve située dans une zone comprise entre la moitié du rayon de la couronne de frottement et la périphérie externe de celle-ci ;
- ladite rainure circonférentielle se trouve sur un rayon situé entre environ les 2/3 du rayon de la couronne de frottement et sa périphérie externe ;
- ladite rainure circonférentielle présente une section trapézoïdale ;
- lesdites rainures radiales présentent une section trapézoïdale.

L'invention concerne également une couronne de frottement pour disque de friction d'embrayage fonctionnant à sec, comportant des rainures ménagées sur une face destinée à venir au contact d'un plateau de réaction ou d'un plateau de pression d'un embrayage qui est caractérisée en ce que lesdites rainures comportent une rainure circonférentielle communiquant avec une pluralité de rainures radiales débouchant à la périphérie interne de la couronne de frottement et est isolée de la périphérie externe de la couronne de frottement.

Selon d'autres aspects pris séparément ou dans toutes leurs combinaisons techniquement possibles :
- au moins une rainure radiale présente une section qui s'élargit dans la direction radiale vers l'extérieur de la couronne ;
- ladite rainure circonférentielle est isolée de la périphérie externe de la couronne de frottement ;
- une seule rainure circonférentielle est ménagée dans la couronne de frottement ;
- ladite rainure circonférentielle se trouve située dans une zone comprise entre la moitié du rayon de la couronne de frottement et la périphérie externe de celle-ci ;
- ladite rainure circonférentielle se trouve sur un rayon situé entre environ les 2/3 du rayon de la couronne de frottement et sa périphérie externe ;
- ladite rainure circonférentielle présente une section trapézoïdale ;
- lesdites rainures radiales présentent une section trapézoïdale.

On a pu constater que, grâce à l'invention, il se crée, lors du débrayage, un matelas d'air sous pression de même valeur entre chaque couronne du disque de friction et le plateau de l'embrayage associé (plateau de réaction ou plateau de pression), ce qui a pour effet de provoquer un décollement effectif et symétrique des couronnes de frottement et, par conséquent, un débrayage franc et total.

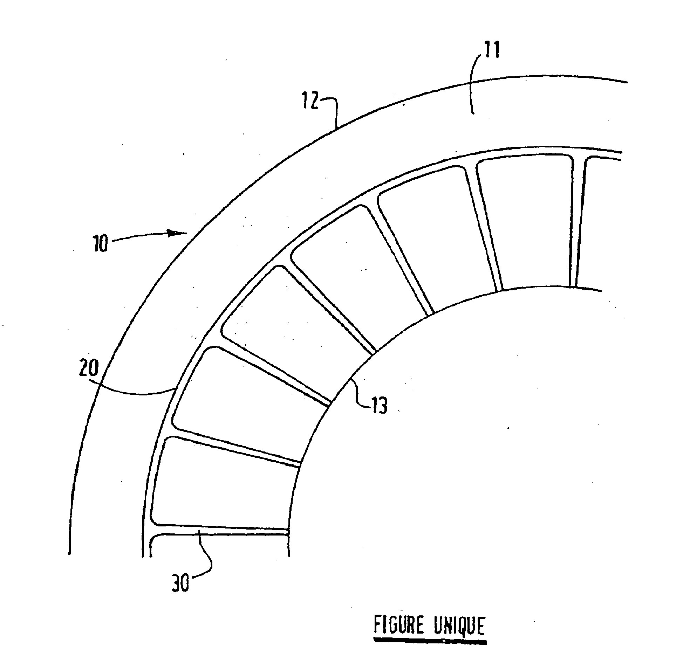

D'autres aspects et avantages de l'invention apparaîtront dans la description ci-après d'un exemple de réalisation de l'invention en regard de la figure unique qui représente une vue partielle, de face, d'une couronne de frottement selon l'invention.

Un disque de friction d'embrayage fonctionnant à sec comporte, de manière usuelle, deux couronnes de frottement directement ou indirectement solidarisées chacune à un support métallique qui peut être commun aux deux couronnes et qui, de préférence, forme ou est associé à un dispositif de progressivité.

Un amortisseur de torsion est avantageusement disposé entre le(s) support(s) de couronnes de frottement et un moyeu cannelé destiné à être monté sur l'arbre d'entrée d'une boîte de vitesses.

Chaque couronne de frottement 10 (voir figure unique) comporte des moyens 20,30 générant une force de pression d'air sous l'effet de la rotation du disque de friction.

Lesdits moyens générant une force de pression d'air comprennent des rainures 20,30 ménagées sur la face 11 de chacune des couronnes de frottement 10 destinées à venir en contact avec respectivement un plateau de réaction et un plateau de pression d'un embrayage qui, d'une couronne à l'autre, sont disposées de manière symétrique par rapport à un plan médian du disque de friction, en sorte de créer des forces de pression d'air de part et d'autre du disque de friction en rotation, qui sont sensiblement égales en étant opposées.

Il a déjà été proposé de doter les couronnes de frottement de rainures mais celles-ci, destinées à recueillir et évacuer les poussières résultant de l'usure du matériau de frottement constituant les couronnes, n'ont aucun effet sur le décollement des couronnes, voire ont un effet néfaste.

Comme on peut le voir sur la figure, lesdites rainures comportent une rainure circonférentielle 20 isolée de la périphérie externe 12 de la couronne 10, ainsi qu'une pluralité de rainures radiales 30 débouchant dans la rainure circonférentielle 20, ainsi qu'à la périphérie interne 13 de la couronne.

La rainure circonférentielle 20 se trouve située dans une zone comprise entre la moitié du rayon de la couronne de frottement et la périphérie externe 12 de celle-ci et telle que représentée, la rainure circonférentielle 20 se trouve située sur un rayon situé entre environ les 2/3 du rayon de la couronne de frottement 10 et sa périphérie externe 12.

La rainure circonférentielle 10 et/ou les rainures radiales 30 et de préférence toutes, présente(nt) une section de forme trapézoïdale.

La demanderesse a découvert, en effet, que grâce à une telle forme de section qui éloigne vers l'extérieur le centre de gravité du matelas d'air emprisonné par les rainures, la force de répulsion tendant à éloigner chaque couronne 20 du plateau de l'embrayage associé est fortement augmentée, ce qui contribue à favoriser un débrayage franc et total.

Des expérimentations ont pu mettre en évidence que la rainure circonférentielle 20 permet de capter un matelas d'air sous pression lorsque l'embrayage est en rotation et que les rainures radiales 30 alimentent en air, par effet centrifuge, la rainure circonférentielle 20.

En variantes non représentées :
- tout ou partie des rainures radiales présente(nt) une section qui s'élargit dans la direction radiale vers l'extérieur de la couronne ;
- plusieurs rainures circonférentielles sont prévues, plus particulièrement quand il s'agit d'un disque de friction de grand diamètre, communiquant entre elles par des rainures radiales.

## Revendications

1. Couronne de frottement pour disque de friction d'embrayage fonctionnant à sec comportant des rainures ménagées sur une face destinée à venir au contact d'un plateau de réaction ou d'un plateau de pression d'un embrayage, lesdites rainures comportant une rainure circonférentielle (20) communiquant avec une pluralité de rainures radiales (30) débouchant à la périphérie interne (13) de la couronne de frottement, **caractérisée en ce que** ladite rainure circonférentielle est isolée de la périphérie externe (12) de la couronne de frottement.

2. Couronne de frottement selon la revendication 1, **caractérisée en ce qu'**au moins une rainure radiale présente une section qui s'élargit dans la direction radiale vers l'extérieur de la couronne.

3. Couronne de frottement selon l'une quelconque des revendications précédentes, **caractérisée en ce qu'**une seule rainure circonférentielle (20) est ménagée dans la couronne de frottement.

4. Couronne de frottement selon la revendication 3, **caractérisée en ce que** ladite rainure circonférentielle (20) se trouve située dans une zone comprise entre la moitié du rayon de la couronne de frottement et la périphérie externe (12) de celle-ci.

5. Couronne de frottement selon la revendication 4, **caractérisée en ce que** ladite rainure circonférentielle se trouve sur un rayon situé entre environ les 2/3 du rayon de la couronne de frottement et sa périphérie externe (12).

6. Couronne de frottement selon l'une quelconque des revendications précédentes, **caractérisée en ce que** ladite rainure circonférentielle (20) présente une section trapézoïdale.

7. Couronne de frottement selon l'une quelconque des revendications précédentes, **caractérisée en ce que** lesdites rainures radiales (30) présentent une section trapézoïdale.

8. Disque de friction d'embrayage pour embrayage fonctionnant à sec, plus particulièrement pour véhicule automobile présentant deux couronnes de frottement (10) selon l'une quelconque des revendications 1 à 7, **caractérisé en ce que** lesdites couronnes de frottement (10) comportent des moyens (20, 30) générant une force de pression d'air sous l'effet de la rotation du disque de friction, **en ce que** lesdits moyens générant une force de pression d'air comprennent des rainures (20, 30) ménagées sur la face (11) de chacune des couronnes de frottement destinées à venir en contact avec respectivement un plateau de réaction et un plateau de pression d'un embrayage.

## Claims

1. Friction ring for a clutch friction disc functioning dry, comprising grooves formed on a face intended to come into contact with a reaction plate or a pressure plate of a clutch, the said grooves comprising a circumferential groove (20) communicating with a plurality of radial grooves (30) emerging at the inner periphery (13) of the friction ring, **characterised in that** the said circumferential groove is isolated from the outer periphery (12) of the friction ring.

2. Friction ring according to claim 1, **characterised in that** at least one radial groove has a cross section that widens in the radial direction towards the outside of the ring.

3. Friction ring according to any one of the preceding claims, **characterised in that** a single circumferential groove (20) is formed in the friction ring.

4. Friction ring according to claim 3, **characterised in that** the said circumferential groove (20) is situated in a zone lying between the halfway point on the radius of the friction ring and the outer periphery (12) of the latter.

5. Friction ring according to claim 4, **characterised in that** the said circumferential groove is on a radius situated between about two-thirds of the radius of the friction ring and its outer periphery (12).

6. Friction ring according to any one of the preceding claims, **characterised in that** the said circumferential groove (20) has a trapezoidal cross section.

7. Friction ring according to any one of the preceding claims, **characterised in that** the said radial grooves (30) have a trapezoidal cross section.

8. Clutch friction disc for a dry clutch, more particularly for a motor vehicle, having two friction rings (10) according to any one of claims 1 to 7, **characterised in that** the said friction rings (10) include means (20, 30) that generate an air pressure force under the effect of the rotation of the friction disc, **in that** the said means that generate an air pressure force comprise grooves (20, 30) formed on the face (11) of each of the friction rings intended to come into contact with a reaction plate and a pressure plate, respectively, of a clutch.

## Patentansprüche

1. Reibring für die Reibungsscheibe einer Trockenkupplung, der auf einer Fläche eingearbeitete Nuten enthält, und der dazu bestimmt ist, mit einer Gegenanpressplatte oder mit einer Druckplatte einer Kupplung in Kontakt zu kommen, wobei die besagten Nuten eine Umfangsnut (20) umfassen, die mit einer Mehrzahl von radialen Nuten (30) in Verbindung steht, die am inneren Umfang (13) des Reibrings münden, **dadurch gekennzeichnet, dass** die besagte Umfangsnut vom äußeren Umfang (12) des Reibrings getrennt ist.

2. Reibring nach Anspruch 1, **dadurch gekennzeichnet, dass** wenigstens eine radiale Nut einen Querschnitt aufweist, der sich in der radialen Richtung zum Außenbereich des Reibrings hin erweitert.

3. Reibring nach einem der vorangehenden Ansprüche, **dadurch gekennzeichnet, dass** nur eine einzige Umfangsnut (20) in den Reibring eingearbeitet ist.

4. Reibring nach Anspruch 3, **dadurch gekennzeichnet, dass** sich die besagte Umfangsnut (20) in einem Bereich befindet, der zwischen der Hälfte des Radius des Reibrings und dessen äußerem Umfang (12) enthalten ist.

5. Reibring nach Anspruch 4, **dadurch gekennzeichnet, dass** sich die besagte Umfangsnut auf einem Radius befindet, der zwischen 2/3 des Radius des Reibrings und seinem äußeren Umfang (12) liegt.

6. Reibring nach einem der vorangehenden Ansprüche, **dadurch gekennzeichnet, dass** die besagte Umfangsnut (20) einen trapezförmigen Querschnitt aufweist.

7. Reibring nach einem der vorangehenden Ansprüche, **dadurch gekennzeichnet, dass** die besagten radialen Nuten (30) einen trapezförmigen Querschnitt aufweisen.

8. Reibungsscheibe einer Trockenkupplung, insbesondere für Kraftfahrzeuge, die zwei Reibringe (10) nach einem der Ansprüche 1 bis 7 aufweist, **dadurch gekennzeichnet, dass** die besagten Reibringe (10) Mittel (20, 30) umfassen, die eine Luftdruckkraft unter der Einwirkung der Drehung der Reibungsscheibe erzeugen, dass die besagten eine Luftdruckkraft erzeugenden Mittel Nuten (20, 30) umfassen, die auf der Fläche (11) jedes der Reibringe eingearbeitet sind, die dazu bestimmt sind, mit einer Gegenanpressplatte bzw. mit einer Druckplatte einer Kupplung in Kontakt zu kommen.
